(19) Europäisches Patentamt
European Patent Office
Office européen des brevets

(11) EP 0 735 117 B1

(12) **FASCICULE DE BREVET EUROPEEN**

(45) Date de publication et mention de la délivrance du brevet:
**30.01.2002 Bulletin 2002/05**

(51) Int Cl.$^7$: **C09D 4/00**, C09D 5/08, C09D 183/04

(21) Numéro de dépôt: **96400489.9**

(22) Date de dépôt: **08.03.1996**

(54) **Procédé pour réaliser un revêtement sur une tôle en acier électrique et tôle obtenue**

Verfahren zur Beschichtung eines Elektroblechs und das so beschichtete Elektroblech

Process for coating an electrical steel sheet and electrical sheet made by this method

(84) Etats contractants désignés:
**AT BE CH DE DK ES FI FR GB GR IE IT LI LU NL PT SE**

(30) Priorité: **09.03.1995 FR 9502746**

(43) Date de publication de la demande:
**02.10.1996 Bulletin 1996/40**

(73) Titulaire: **SOLLAC**
**92800 Puteaux (FR)**

(72) Inventeurs:
- **Bavay, Jean-Claude**
  **F-62330 Isbergues (FR)**
- **Thibault, Marc**
  **F-59000 Lille (FR)**
- **Hernandez, Jacques**
  **F-48200 Saint Chely D'Apcher (FR)**

(74) Mandataire: **Ventavoli, Roger et al**
**TECHMETAL PROMOTION (Groupe USINOR), Immeuble " La Pacific " 11/13 Cours Valmy La Défense 7, TSA 10001**
**92070 Paris La Défense Cédex (FR)**

(56) Documents cités:
**EP-A- 0 306 700**
**EP-A- 0 427 395**
**WO-A-91/00780**
**WO-A-93/23348**
**DE-A- 3 407 093**

- **PATENT ABSTRACTS OF JAPAN vol. 011, no. 242 (C-438), 7 Août 1987 & JP-A-62 050483 (SUMITOMO METAL IND LTD), 5 Mars 1987,**
- **PATENT ABSTRACTS OF JAPAN vol. 016, no. 033 (C-0905), 28 Janvier 1992 & JP-A-03 243780 (KOBE STEEL LTD), 30 Octobre 1991,**
- **PATENT ABSTRACTS OF JAPAN vol. 014, no. 197 (C-0712), 23 Avril 1990 & JP-A-02 038582 (KOBE STEEL LTD), 7 Février 1990,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 735 117 B1

Printed by Jouve, 75001 PARIS (FR)

## Description

La présente invention concerne un procédé pour réaliser un revêtement sur une tôle en acier électrique dans lequel on dépose sur la tôle un préhydrolysat composé d'un précurseur, d'un solvant et d'un catalyseur, on chauffe le préhydrolysat à une température pour l'obtention d'un revêtement sec.

Il existe des procédés de revêtement de type organique sur un support métallique à base de fer. Les revêtements organiques obtenus par ces procédés présentent une bonne adhérence et protègent efficacement la surface du support contre la corrosion. Cependant, ils résistent mal à un traitement thermique à températures élevées et ne supportent pas une température supérieure à 300°C en continu.

Il existe également des procédés de revêtement de type minéral. Les revêtements obtenus présentent une bonne stabilité thermique mais une adhérence médiocre.

Il est connu du brevet US 4,032,675, un revêtement organo-minéral déposé sur un acier électrique, sous la forme d'une émulsion constituée d'une dispersion de particules dans une résine, la résine étant compatible avec une solution à base d'acide chromique.

Les revêtements organo-minéraux réalisés à base de chromates adhérents et isolants présentent une grande toxicité et nécessitent donc des installations d'enduction et de dépollution très coûteuses pour la protection des lieux de travail et de l'environnement.

Dans le brevet U.S. 4,554,213, il est décrit un revêtement organo-minéral déposé sur un acier et composé de phosphate et de résine compatible avec les ions phosphates acides. Ce revêtement organo-minéral à base de phosphate non toxique présente une isolation électrique réduite après traitement thermique. Cette isolation électrique réduite peut être augmentée par un apport de pigments par exemple minéraux, ce qui entraîne les inconvénients d'une augmentation notable de l'usure des outils de découpe et de l'apparition d'un poudrage dans le cas de revêtement épais.

Le document JP 62 050483 préconise l'application d'alkoxy silanes monomères et un solvant tel que eau, xylène, toluène qui sont des substances nocives pour l'environnement.

L'invention a pour but la réalisation d'un revêtement organo-minéral sur une tôle d'acier magnétique dit électrique, revêtement qui possède les qualités d'adhérence d'un revêtement organique et une bonne isolation électrique assurant un dépôt d'épaisseur réduite garantissant un facteur de foisonnement amélioré et une bonne aptitude à la découpe.

L'invention a pour objet un procédé pour réaliser un revêtement sur une tôle en acier électrique dans lequel on dépose sur la tôle un préhydrolysat composé d'un précurseur, d'un solvant et d'un catalyseur, on chauffe le préhydrolysat à une température pour l'obtention d'un revêtement sec. Le procédé se caractérise en ce que :

- on dépose sur au moins une face de la tôle en acier électrique un préhydrolysat comprenant dans sa composition, un précurseur choisi parmi un monomère alkoxysilane, de formule $Si\,(OR)_n\,R'_{(4-n)}$ n étant égal à 2 ou 3, R' désignant un groupement alkyl de type méthyl ou aryl de type phényl, un solvant composé d'eau et d'un alcool choisi parmi l'alcool méthylique, l'alcool éthylique, l'alcool butylique, l'isopropanol, et un catalyseur acide,
- on chauffe le préhydrolysat à une température inférieure à 400°C pour obtenir un film sec puis la polymérisation du préhydrolysat qui génère un revêtement du type vernis silicone.
- le catalyseur étant choisi parmi l'acide nitrique, l'acide sulfurique, l'acide phosphorique, l'acide chlorhydrique.

Les autres caractéristiques de l'invention sont :

- le préhydrolysat a un pH compris entre 2 et 3 ;
- le préhydrolysat comprend en outre dans. sa composition une résine organique hydrosoluble ;
- la résine hydrosoluble est choisie parmi une polyvinylpyrrolidone, un polymère acrylique, un polyéthylène glycol, un polypropylène glycol, un acide polyacrylique (PAA), pris seuls ou en combinaison ;
- le film sec, après polymérisation du préhydrolysat, comprend une proportion de résine inférieure à 40 % ;
- le préhydrolysat comprend en outre des particules solides hydrophiles ;
- les particules solides hydrophiles sont choisies parmi la silice pyrogénée, l'alumine, la magnésie ;
- la silice pyrogénée a une granulométrie comprise entre 5 et 100 nm et une surface spécifique comprise entre 5 et 500 $m^2/g$ ;
- le préhydrolysat comprend en outre, un pigment organique ou minéral ;
- après obtention du revêtement du type vernis silicone, on découpe la tôle en éléments qui par empilement forment un circuit magnétique ;
- la tôle revêtue du vernis silicone ou le circuit magnétique obtenu par découpe de la tôle revêtue du vernis en éléments et empilement desdits éléments est soumis à un traitement thermique de recuit à une température supérieure à 400°C ;
- le traitement de recuit est effectué sous air ;

- le traitement thermique de recuit comprend :
  - . une montée en température avec un gradient de température inférieur à 100°C/heure, sous air ;
  - . un palier de température compris entre 400°C et 600°C dont la durée est comprise entre 1 heure et 2 heures, sous air;
  - . un refroidissement sous azote sec ou humide ;
- le traitement thermique de recuit comprend :
  - . une montée en température avec un gradient de température inférieur à 100°C/heure sous air;
  - . un premier palier de température compris entre 400°C et 600°C dont la durée est comprise entre 1 heure et 2 heures sous air,
  - . une remontée en température sous atmosphère d'azote sec ou humide ;
  - . un second palier de température dit palier supérieur compris entre 700°C et 850°C d'une durée comprise entre 1 heure et 4 heures, sous une atmosphère d'azote sec ou humide;
  - . un refroidissement sous azote sec ou humide;
- le vernis de type silicone est transformé en silice amorphe isolante.

La description qui suit et les figures annexées, le tout donné à titre d'exemple fera bien comprendre l'invention.

La figure 1 est un diagramme représentant les différentes étapes du procédé selon l'invention.

La figure 2 est une courbe représentant l'évolution, dans l'épaisseur du revêtement, du rapport des aires des bandes d'absorption infrarouge des groupements [ CH ] / [Si-O-Si ], dans l'exemple de réalisation d'une tôle d'acier électrique de type "Fully process", comportant une addition de PAA dans le préhydrolysat.

La figure 3A présente un cycle de température pour un traitement de recuit dans une application par exemple du type "fully process" après revêtement de la tôle par un vernis silicone modifié préalablement polymérisé, pour la transformation du revêtement organo-minéral en silice ou en céramique.

La figure 3B présente un cycle de température pour un traitement de recuit dans une réalisation d'une tôle électrique par exemple du type "semi process" après le revêtement de la tôle par un vernis silicone modifié préalablement polymérisé, pour la formation d'un revêtement de type céramique.

L'invention concerne un procédé pour réaliser un revêtement sur une tôle d'acier électrique à partir d'un dépôt d'un vernis silicone sur la tôle. Les vernis silicones ont des structures caractérisées par des enchaînements du type siloxane:

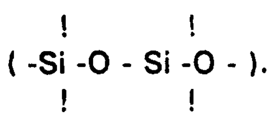

Ils présentent l'avantage d'avoir une excellente stabilité thermique et une grande inertie chimique en raison de l'énergie de liaison élevée de la liaison Si-O. De plus, la présence de groupements organiques fixés sur le silicium par des liaisons Si-C apporte au réseau du vernis une bonne flexibilité ainsi que des propriétés hydrofugeantes.

Selon l'invention, le revêtement silicone est formé à partir de siloxane contenant des liaisons Si-OH ou Si-OR, R désignant un groupement, de préférence, de type alkyl, de préférence de type éthyl, assurant la réticulation.

Dans une forme de l'invention on emploie les précurseurs du type alkoxysilane. Ces derniers présentent l'intérêt de conserver une bonne stabilité au préhydrolysat et polymérisent selon les réactions d'hydrolyse et de condensation suivantes:

$$\equiv Si\text{-}OR + H_2O \rightarrow \equiv Si\text{-}OH + ROH$$

$$\equiv Si\text{-}OH + HO\text{-}Si\equiv \rightarrow \equiv Si\text{-}O\text{-}Si\equiv + H_2O$$

$$\equiv Si\text{-}OH + RO\text{-}Si\equiv \rightarrow \equiv Si\text{-}O\text{-}Si\equiv + ROH$$

Selon l'invention, le revêtement est réalisé à partir d'un préhydrolysat contenant par exemple, un monomère

alkoxysilane, un solvant polaire, un catalyseur.

Le monomère alkoxysilane est un ORMOSIL, ("organically modified silicate"), de formule générale Si (OR )$_n$ R' $_{(4-n)}$; n étant égal à 2 ou 3. R' désigne un groupement alkyl de type méthyl ou aryl de type phényl.

Le groupement méthyl assure une stabilité thermique à des températures inférieures à 400°C, le groupement phényl apporte une bonne thermoplasticité au vernis silicone.

Dans le cas où n est égal à 2 le monomère silane conduit à un polymère linéaire, alors que si n est égal à 3, le polymère résultant forme un réseau tridimensionnel.

Le solvant utilisé est un mélange solvant polaire/eau où l'eau participe à la réaction en hydrolysant les liaisons Si-OR pour former des liaisons silanols Si-OH qui réagissent à leur tour par polycondensation pour former le réseau siloxane. Un solvant polaire est nécessaire pour éviter la gélification du préhydrolysat et il est possible de faire varier la durabilité de la solution en variant la concentration dudit solvant. Le solvant choisi est généralement un alcool de faible masse moléculaire et, pour des raisons de toxicité, l'éthanol est préférable au méthanol.

Le catalyseur acide est un acide minéral dont la nature dépend du substrat à recouvrir. Le rôle de l'acide est double, d'une part, il initie la réaction entre les différents constituants du mélange et d'autre part, son rôle oxydant permet l'accrochage du dépôt sur la surface ferreuse. Pour un support ferreux, l'acide nitrique est plus indiqué. Le pH du préhydrolysat est compris entre 2 et 3.

Le tableau 1 suivant donne une composition d'un préhydrolysat selon l'invention.

Tableau 1 :

| Préhydrolysat | Nombre de moles |
|---|---|
| monomère silane | 1 |
| $H_2O$ pour n = 2 | 3 |
| $H_2O$ pour n = 3 | 4,5 |
| Ethanol | 4 |
| $HNO_3$ | 0,003 |

Des variations de ces valeurs de l'ordre de 5 à 10 % n'influent pas sur le procédé mais la teneur en chacun des constituants a une influence sur la cinétique réactionnelle et l'aspect de surface du revêtement. Le nombre de molécules d'eau par liaison Si-OR sur le monomère silane est compris entre 1 et 2 et l'optimum est de 1,5 (voir tableau 1). Ce rapport garantit une hydrolyse complète de tous les groupements Si-OR. La teneur pondérale en silane dans le film humide du préhydrolysat est de l'ordre de 30 %.

La préparation du préhydrolysat se fait selon le mode opératoire suivant: Le monomère silane est additionné au mélange solvant polaire et eau sous agitation puis on ajoute le catalyseur acide avec précaution car la réaction est exothermique.

Le dépôt du préhydrolysat sur l'acier électrique, ferreux, se fait par enduction sous rouleaux, sur une ou deux faces à la température ambiante, permettant ainsi de contrôler l'épaisseur déposée. Le dépôt est séché et polymérisé immédiatement après enduction sur une tôle électrique, support ferreux de l'ordre de 0,5 millimètres, à une température comprise entre 200 et 400°C pendant un temps compris entre 30 secondes et 2 minutes, conditions nécessaires pour une polymérisation complète du dépôt formant le revêtement

Au préhydrolysat peut éventuellement être adjointe une résine pour améliorer la flexibilité du réseau du vernis et pour constituer un lubrifiant vis à vis des outils de découpe.

Parmi les types de résines mises en oeuvre dans ce but, il est préférable d'utiliser la polyvinylpyrrolidone et les résines acryliques. D'autres résines organiques compatibles avec le préhydrolysat peuvent être additionnées afin d'accentuer certaines caractéristiques du revêtement organo-minéral. Ainsi, le polypropylène glycol et le polyéthylène glycol améliorent la faculté de glisser de la surface du revêtement et pour optimiser l'épaisseur du préhydrolysat, une augmentation de sa viscosité est possible par ajout de résines acryliques ou de polyéthylène glycol. Les proportions des divers mélanges de résines organiques doivent être ajustées afin de garantir leur compatibilité avec le préhydrolysat.

La quantité de résines organiques dans le préhydrolysat est ajustée de façon à ce que sa teneur dans le film sec soit comprise entre 0 et 40%. Ces limites de la composition donnent un bon compromis entre l'adhérence et la tenue en température du revêtement organo-minéral final qui est un vernis silicone modifié.

Le vernis silicone modifié présente une faible rugosité. Il est possible d'augmenter cette rugosité pour une éventuelle amélioration de la soudabilité du revêtement par addition de particules organiques ou inorganiques au préhydrolysat.

Selon l'invention, on introduit dans le préhydrolysat des particules de silice pyrogénée.

Les particules de silice pyrogénée sont fortement solidaires du réseau car elles comportent de nombreux

groupements silanols ≡Si-OH surfaciques qui réagissent avec les groupements silanols formés par l'hydrolyse des groupements ≡Si-OEt du silane.

Les liaisons chimiques qui se forment entre la charge minérale et le revêtement accroissent la cohésion du réseau.

Différents types de silice pyrogénée existent, différenciées par la taille des particules et leurs surfaces spécifiques. Plus la surface spécifique de la silice est élevée, plus les particules ont tendance à s'agglomérer et les agglomérats résultant augmentent fortement la rugosité du revêtement. Si une faible augmentation de rugosité est visée, il est préférable d'employer des particules de silice pyrogénée de grande taille, c'est à dire de quelques dizaines de nm, et de faible surface spécifique, c'est à dire de quelques dizaines de mètres carrés par gramme. Il est également possible de mélanger plusieurs types de silice pyrogénée de façon à obtenir une répartition plus homogène des particules et une rugosité contrôlée plus régulière. L'addition de silice pyrogénée a, en outre, pour effet, d'augmenter l'épaisseur et l'isolation électrique du revêtement.

Il est possible de pigmenter le revêtement transparent par addition au préhydrolysat de pigments organiques ou minéraux, ces pigments pouvant améliorer la tenue à la corrosion et l'isolation électrique du revêtement.

La partie organique du revêtement organo-minéral est constituée des radicaux fixés sur les atomes de silicium et du polymère organique pouvant être additionné au préhydrolysat, la partie minérale étant formée du réseau siloxane et de la silice pyrogénée éventuellement présente dans le revêtement. Un tel revêtement possède une résistance thermique à des températures supérieures à 300°C.

Un recuit à une température supérieure à 400°C à l'air transforme le vernis silicone en silice.

Au cours du traitement thermique, les groupements organiques sont détruits avec dégagement de divers produits, en particulier, CO, $CO_2$, et $H_2O$. Le vernis est soumis à une oxydation qui remplace les liaisons Si-C par des liaisons Si-O. La dégradation des groupements organiques crée une porosité du revêtement, cette porosité dépendant de la proportion en groupements organiques. La proportion en groupements organiques est liée à la teneur en polymères organiques dans le film et à la nature du monomère silane employé. Ainsi, les monomères conduisant à la formation d'un réseau méthylsiloxane entraînent, lors d'un recuit à haute température à l'air, une porosité plus faible que les monomères formant un réseau phénylsiloxane. La présente invention préconise de préférence, l'emploi de monomères contenant des radicaux méthyl lorsqu'un traitement thermique à température supérieure à 400°C est envisagé.

De plus, la nature du polymère a aussi une influence sur la décarburation du revêtement. L'énergie de la liaison C-C est de 343 kJ/mol, celle des liaisons C=C de 598 kJ/mol, et celle des liaisons C≡ C de 782 kJ/mol. Il est préférable d'employer des polymères saturés qui nécessitent une plus faible énergie pour se dégrader. Par ailleurs, si le rapport du nombre d'atomes d'oxygène par rapport au nombre d'atomes de carbone dans le polymère est plus faible, l'apport d'oxygène nécessaire pour la décarburation du revêtement est élevé.

De préférence, selon l'invention, on emploie des polymères saturés ayant un rapport entre le nombre d'atomes d'oxygène et le nombre d'atomes de carbone le plus élevé possible et de préférence supérieur à 2.

La porosité créée par le dégagement des produits issus de la dégradation des groupements organiques permet la diffusion de l'oxygène à travers le revêtement avec formation de FeO et $Fe_3O_4$ au cours de la montée en température, puis de $Fe_2O_3$, lors du refroidissement. L'oxydation de la tôle électrique, substrat ferreux, nuit à l'aspect du revêtement.

Un recuit à une température supérieure à 400°C sous atmosphère neutre, par exemple de l'azote, empêche la transformation de la silicone en silice mais protège la surface de la tôle substrat contre l'oxydation. Les groupements organiques sont détruits, mais, en raison de l'absence relative d'oxygène, la formation d'oxyde de carbone est limitée. Il se produit une graphitisation par piégeage du carbone dans le revêtement. Selon l'invention, on effectue l'élimination du carbone du revêtement par traitement thermique à l'air entre 400 et 600°C pour éviter l'oxydation du métal de la tôle. Si on effectue le recuit sous atmosphère d'azote humide, on ne parvient pas à décarburer totalement le revêtement, et cela, même à des températures supérieure à 600°C et avec un point de rosée élevé.

Comme représenté sur le diagramme de la figure 1, deux types de traitements thermiques successifs peuvent être réalisés sur la tôle électrique comportant un vernis silicone, notamment, chargé en silice pyrogénée :

- un traitement thermique à une température supérieure à 400°C, permettant la transformation de la silicone en réseau silicique non fissuré présentant une bonne résistance d'isolation électrique sous faible épaisseur. Dans le cas d'un revêtement pigmenté, ce traitement thermique permet la formation d'une céramique. On désigne par céramique un mélange de silice et d'au moins un autre oxyde.
- un traitement thermique sous gaz neutre à une température supérieure à 700°C permet la relaxation des contraintes, la décarburation de la tôle, le grossissement des grains.

Les traitements thermiques de recuit décrits comprennent les cinétiques de montée en température et le refroidissement dudit recuit.

Dans le cas où seule une transformation de la silicone en silice est souhaitée, le recuit est réalisé de la façon suivante :

- une montée en température avec un gradient de température inférieur à 100°C/heure sous air,
- un palier de température compris entre 400°C et 600°C à l'air, dont la durée est comprise entre 1 heure et 2 heures,
- un refroidissement sous azote avec éventuellement un point de rosée permettant l'élimination complète du carbone du revêtement.

Au cours d'un tel traitement thermique, la dégradation des groupements organiques se produit avec dégagement de CO, CO2, $H_2O$, tandis que le silicone se transforme en silice pure.

Dans le cas où la relaxation des contraintes, la décarburation de l'acier, le grossissement des grains sont souhaités, le recuit comprend :

- une montée en température avec un gradient de température inférieur à 100°C/heure sous air,
- un premier palier de température compris entre 400°C et 600°C sous air, dont la durée est comprise entre 1 heure et 2 heures,
- une remontée en température sous atmosphère d'azote avec un gradient de température inférieur à 100 C/heure,
- un second palier de température dit palier supérieur compris entre 700°C et 850°C d'une durée comprise entre 1 heure et 2 heures, sous une atmosphère contrôlée d'azote, avec éventuellement un point de rosée supérieur à +30°C pour assurer la décarburation de la tôle et le grossissement des grains,
- un refroidissement sous azote sec ou humide.

Ce traitement thermique peut être effectué sur un empilage de tôles.

En effet, il est nécessaire de rappeler deux procédés de réalisation de tôles magnétiques dites aussi tôles électriques.

Dans un procédé de réalisation d'une tôle électrique dit "fully-process", la tôle est obtenue à partir d'une bobine laminée à chaud. La bobine est ensuite laminée à froid, en une ou plusieurs étapes de laminage à froid, les étapes de laminages à froid pouvant comporter éventuellement au moins un recuit préalable et au moins un recuit intermédiaire. Après les étapes de laminage à froid, la bobine est soumise à un recuit final, statique ou au défilé, qui a pour but, une décarburation, une recristallisation et une croissance de grains.

Après découpage de la bobine, les éléments réalisés sont assemblés par empilement pour former des circuits magnétiques qui peuvent subir un recuit d'élimination des contraintes internes générées par le découpage. Ce traitement thermique de recuit n'est généralement pas prodigué pour des applications courantes car, après découpage des éléments de circuit et empilement, le circuit conserve un niveau de qualité satisfaisant. Un recuit d'élimination des contraintes internes confère aux circuits, des propriétés exceptionnelles qui peuvent être désirées pour des applications nécessitant de très faibles niveaux de pertes magnétiques.

Dans un procédé de réalisation d'une tôle magnétique dit "semi-process", la bobine est soumise après laminage à froid à un recuit dit de recristallisation. La bobine est ensuite soumise à un laminage du type "skin pass", consistant en un laminage à froid avec un taux de réduction faible, variant de 1 à 12 %. A ce stade du procédé, la bobine est découpée pour la réalisation d'éléments, qui, assemblés par empilement, forment des circuits magnétiques. Ces circuits subissent un recuit statique qui a pour but, une décarburation, un grossissement des grains, l'isolation des éléments dans les circuits. Avec les types de recuits utilisés, connus, la résistance d'isolement des éléments de circuit est relativement faible, c'est à dire d'environ 0,5 $\Omega.cm^2$ pour une épaisseur moyenne de 3 $\mu$m. Cette isolation électrique est le résultat de la formation d'une couche d'oxydes qui provoque un bleuissage de la surface des tôles.

Le procédé de l'invention permet par les recuits envisagés, la transformation complète du revêtement organo-minéral en un revêtement de silice amorphe non fissuré ou en une céramique.

Dans un exemple 1 d'application, le revêtement est élaboré à partir du préhydrolysat suivant :

TABLEAU 2 :

| Composé | Nbre de mol $10^3$ | Masse kg | Teneur pondérale % |
|---|---|---|---|
| MTES | 1 | 178 | 32,77 |
| $H_2O$ | 4,5 | 81 | 14,91 |
| ETHANOL | 4 | 284 | 52,28 |
| $HNO_3$ | 0,003 | 0,2 | 0,04 |

Dans une solution contenant 81 kg de H20 et 284 kg d'éthanol , on ajoute 178 kg de méthyltriéthoxysilane

(MTES), $(CH_3)Si(OC_2H_5)_3$, sous agitation. On ajoute ensuite 0,2 kg d'acide nitrique qui amène le pH de la solution à une valeur comprise entre 2 et 3.

Ce préhydrolysat est appliqué par enduction sous rouleaux sur une ou deux faces sur la bande de tôle d'acier électrique, l'acier ayant une teneur en silicium comprise entre 0 et 3,2 %, l'épaisseur de la bande variant de 0,2 à 1,5 millimètre. Le revêtement est soumis à une température de 350°C pendant une durée variant de 30 secondes à 1 minute selon l'épaisseur de la tôle. Le revêtement de faible épaisseur réalisé présente de bonnes propriétés d'isolation électrique. Pour une épaisseur de revêtement de l'ordre de 1 μm, la résistance électrique surfacique est supérieure à 5 $\Omega$ .$cm^2$.

L'aptitude au découpage, caractérisée par l'énergie locale en KJ/mm, dissipée par frottement utilisée comme critère de résistance à l'usure, est identique pour un acier du type "fully process" à 0,3 % de Si revêtu du revêtement organo-minéral et pour le même acier revêtu d'un vernis polyester connu pour une épaisseur de revêtement comprise entre 1 et 2 μm.

Dans un exemple 2 d'application, on ajoute progressivement diverses quantités d'une résine, sous la forme d'un polymère organique, au préhydrolysat décrit à l'exemple 1, de façon à améliorer la flexibilité et l'adhérence du revêtement organo-minéral. Ce revêtement est déposé dans les mêmes conditions que définies précédemment sur un support identique.

Le polymère que nous utilisons dans cet exemple est l'acide polyacrylique (Polyacrylic Acid dit PAA), copolymère de l'acide méthacrylique et du méthacrylate de méthyle de masse molaire comprise entre 500.000 et 1.000.000 g.

Les masses de polymère additionnées au préhydrolysat défini au tableau 2 sont présentées ci-dessous :

TABLEAU 3 :

| Teneur en polymère dans le film sec.(%) | Masse de polymère présente dans le préhydrolysat.(kg) |
|---|---|
| 10 | 7,5 |
| 20 | 16,75 |
| 30 | 28,75 |
| 40 | 44,65 |

La masse de PAA permettant d'obtenir la teneur en polymère dans le film sec est dissoute dans 81 kg d'eau. A cette solution sont additionnés sous agitation 284 kg d'éthanol puis 178 kg de MTES et enfin le catalyseur à raison de 0,2 kg d'acide nitrique.

Plus la teneur en PAA est élevée dans le film sec, meilleure est son adhérence. Il est présenté dans le tableau 4 les caractéristiques d'adhérence du revêtement organo-minéral obtenu sur une tôle d'acier électrique support, de 0,5 mm d'épaisseur.

L'échelle de valeur utilisée est la suivante : I: adhérence insuffisante; A: adhérence acceptable; E: adhérence excellente.

Tableau 4 :

| Teneur PAA film sec (%) | Test adhésif | Test de pliage répété (10 fois sur cylindre de diamètre 5mm) | Test de pliage répété + test adhésif |
|---|---|---|---|
| 0 | A | A | I |
| 10 | E | A | I |
| 20 | E | E | A |
| 30 | E | E | E |
| 40 | E | E | E |

Le test adhésif s'effectue en collant un ruban adhésif normalisé ayant une adhésivité comprise entre 6 et 7,5 N/cm sur une tôle revêtue puis on délamine le ruban de la tôle et on observe le délaminage du revêtement de la tôle.

Afin de garantir de bonnes propriétés d'adhérence, d'isolation électrique et de tenue en température, la teneur en PAA doit être comprise entre 20 et 40 %. Une teneur inférieure à 20% apporte une faible amélioration de l'adhérence tandis que pour une teneur supérieure à 40%, on observe des hétérogénéités lors de l'étalement du film humide qui se traduisent par des défauts à la surface du revêtement.

Comme représenté sur la figure 2, une analyse du revêtement par spectrométrie infrarouge en réflexion spéculaire montre que le polymère acrylique vient couvrir le vernis silicone et limite le délaminage du film. En effet, une indexation du rapport de la surface des pics caractéristiques des groupements CH et des ponts Si-O-Si montre une

évolution du rapport de l'intensité de ces deux bandes dans l'épaisseur du revêtement. La figure 2 présente l'évolution du rapport des aires des bandes infrarouge caractéristiques des groupements CH et Si-O-Si dans l'épaisseur du revêtement. On constate que ce rapport diminue lorsqu'on se rapproche de la surface de la tôle électrique support.

Il est à noter que la teneur en polymère organique ne dégrade pas l'isolation électrique du revêtement organo-minéral puisque la résistance d'isolation à l'épaisseur de 1 µm est conservée. 50 % des valeurs de résistance surfacique sont supérieure à 25 $\Omega.cm^2$, 80% des valeurs sont supérieures à 5 $\Omega.cm^2$. A l'épaisseur de 2 µm, la résistance d'isolation mesurée est multipliée d'un facteur 10.

Les revêtements présentés dans les exemples 1 et 2 d'application possèdent une faible rugosité de surface. Pour un revêtement d'épaisseur d'environ 1 µm, sur une tôle électrique support à grains non orientés à 2,9% de Si et de 0,5 mm d'épaisseur, la rugosité moyenne Ra mesurée sur une distance d'évaluation de 0,8 mm est inférieure à 0,18 µm. Il peut être intéressant pour certaines utilisations telles que la soudabilité d'un empilage sur tranche, d'avoir une rugosité contrôlée du revêtement organo-minéral. Cette rugosité peut être nécessaire pour favoriser le dégazage de la partie organique du revêtement lorsqu'on effectue le cordon de soudure de façon à ne pas dégrader le revêtement.

A cet effet, on peut ajouter au préhydrolysat des quantités variables de particules de silice comme par exemple de silice pyrogénée de taille et de surface spécifique contrôlées. La rugosité peut être ajustée en fonction de la teneur en silice et en fonction de la taille des particules. Ainsi pour des particules de taille moyenne de 12 nm et de surface spécifique de 200 $m^2/g$, l'accroissement de la rugosité est notable, tandis qu'il est moins important pour des particules de taille moyenne de 40 nm et de surface spécifique de 50 $m^2/g$. Les types de silice pyrogénée hydrophile utilisés dans cet exemple ont une surface spécifique de 200 $m^2/g$, avec un diamètre moyen de 12 nm et une surface spécifique de 50 $m^2/g$, avec un diamètre moyen de 40 nm.

La quantité de silice pyrogénée additionnée, fonction de la rugosité recherchée, est dispersée par agitation dans un mélange de 81 kg d'eau et de 284 kg d'éthanol. A ce mélange sont additionnés 178 kg de MTES et 0,2 kg de $HNO_3$ pour ajuster le pH à une valeur comprise entre 2 et 3. Le revêtement est appliqué par enduction au moyen de rouleaux sur les deux faces de la tôle électrique et soumis aux mêmes conditions de traitement de cuisson que dans les exemples 1 et 2 précédents.

Le tableau 5 présente les caractéristiques de rugosité obtenues en fonction du type de revêtement.

TABLEAU 5 :

| revêtement | rugosité Ra (micron) |
|---|---|
| Sans silice pyrogénée | 0,18 |
| 5 % en poids de silice pyrogénée de surface spécifique 200 $m^2/g$. | 0,50 |
| 5 % en poids de silice pyrogénée de surface spécifique 50 $m^2/g$. | 0,30 |
| 10 % en poids de silice pyrogénée de surface spécifique 50 $m^2/g$. | 0,50 |

La silice pyrogénée n'est pas retirée par un test d'adhérence au ruban adhésif normalisé ou par pliages répétés sur cylindre de 5 mm de diamètre, ce qui prouve la formation de liaisons entre le réseau siloxane et les particules.

Afin de mettre en évidence l'effet des traitements thermiques de recuit, on utilise une tôle enduite avec le revêtement d'une épaisseur de 1,5 µm élaboré selon l'exemple 2. Ce revêtement organo-minéral qui contient 30 % de PAA dans le film sec est soumis à un traitement thermique selon le cycle présenté sur la figure 3A.

Au cours de ce traitement thermique, la partie organique de revêtement organo-minéral est totalement dégradée et le carbone est éliminé sous la forme de CO et de $CO_2$. Le revêtement obtenu est formé de silice amorphe non fissurée. Le refroidissement sous un point de rosée de + 30°C permet, dans le cas de revêtements épais d'environ 2 µm, ou dans le cas de vernis silicones phénylsiloxanes, de parachever la décarburation du revêtement et d'éviter la graphitisation. Les conditions opératoires doivent donc être adaptées à chaque cas particulier.

Des tôles électriques du type "fully process" contenant dans leur composition 2 % de silicium sont enduites sur les deux faces avec un revêtement organo-minéral élaboré selon l'exemple 2. Le revêtement contient 30 % de PAA et a une épaisseur de 1,5 µm. Les tôles sont découpées, empilées, introduites dans un four puis soumises à un traitement thermique de relaxation des contraintes selon le cycle présenté sur la figure 3B.

Ce traitement thermique présente deux paliers, un premier palier à une température moyenne comprise entre 400 et 600°C, servant à décarburer le revêtement et transformer le vernis silicone modifié en silice, un second palier à une température comprise entre 700 et 850°C, permettant le traitement de relaxation de la tôle et la densification du réseau de silice amorphe.

La vitesse de montée en température, comprise entre 50 et 100°C/heure et une durée de chacun des paliers

comprise entre une heure et deux heures dépendent de l'épaisseur du revêtement et des conditions opératoires telles que, empilage de tôles, nature du silane employé. La durée du maintien à 800°C peut éventuellement être augmentée si on souhaite décarburer l'acier et faire grossir les grains.

Trois températures ont été utilisées pour le premier palier. Pour des températures de 300 et 400°C, le revêtement présente une graphitisation importante dans la matrice de silice et un taux de fissuration modéré lors de l'usage du palier à 300°C. Cette fissuration est due à la thermoplasticité du vernis silicone. A une température inférieure à 300°C, seul le polymère organique se dégrade et le vernis silicone n'est pas suffisamment plastique pour combler les lacunes créées par la dégradation du PAA. A une température inférieure ou égale à 400°C, la graphitisation est due au piégeage du carbone provenant à la fois du PAA et des radicaux organiques de la silicone.

A l'issue d'un cycle comprenant un palier à 500°C à l'air ainsi qu'un palier à 800°C sous azote, le revêtement final est constitué de silice amorphe. L'épaisseur de ce revêtement de silice est inférieure à 1 µm et sa résistance électrique d'isolation surfacique est de l'ordre de quelques dizaines d'$\Omega.cm^2$.Après un recuit de relaxation des contraintes, un revêtement phosphatant d'épaisseur équivalente , inférieure à 1µm présente une résistance d'isolement comprise entre 1 et 5 $\Omega.cm^2$:

Dans un exemple 3 d'application, on ajoute 28,75 kg de PAA à la composition du préhydrolysat décrite dans le tableau 2. Le préhydrolysat ainsi obtenu est déposé sur une tôle électrique du type "Semi-process" ayant une teneur en silicium de $5.10^{-3}$ % et une teneur en carbone de $50.10^{-3}$ %, et une épaisseur de 0,5 mm.

Le traitement thermique de séchage et polymérisation est effectue à 350°C pendant 1 mn, le vernis ayant après séchage une épaisseur d'environ 1µm. La tôle est ensuite découpée pour la réalisation d'éléments qui sont empilés pour former un circuit magnétique. Le circuit est soumis à un traitement thermique comprenant :

- un premier palier sous air à une température de 500°C d'une durée de 2 heures qui assure la transformation du revêtement organo-minéral en silice,
- un second palier à une température de 800°C d'une durée de 4 heures sous atmosphère d'azote humide qui assure la décarburation de l'acier et le grossissement des grains de la tôle.

Après refroidissement, la teneur résiduelle en carbone des éléments situés au coeur du circuit et de $1.10^{-3}$ %. Du point de vue grosseur, le diamètre moyen des grains de la tôle est d'environ 150 µm pour un diamètre moyen de grains initial de 10 µm.

La résistance d'isolement du revêtement sur le support est de quelques $\Omega.cm^2$. Cette valeur est à comparer avec la résistance d'isolement inférieure à 0,5 $\Omega.cm^2$ pour une épaisseur d'environ 3 µm de la couche d'oxydes obtenue après recuit statique des tôles de type "Semi-process".

Les tôles d'acier à grains orientés qui contiennent de 2,5 à 3,5% de silicium sont obtenues selon un procédé connu qui comprend la coulée continue d'une brame ou d'une bande, le laminage à chaud de la brame et de la bande (sauf si cette bande possède une épaisseur inférieure à 2mm), un recuit, une opération de laminage à froid ou deux opérations de laminage à froid avec recuit intermédiaire (le recuit avant le premier laminage à froid étant dans ce cas facultatif), une décarburation, une enduction avec un séparateur de recuit, un recuit de recristallisation secondaire et d'épuration.

Le revêtement isolant obtenu selon le procédé décrit dans la présente invention et qui consiste en :

- un dépôt d'un préhydrolysat comprenant dans sa composition, un précurseur choisi parmi un monomère alkoxysilane ou ORMOSIL, un solvant composé d'eau et d'un alcool choisi parmi l'alcool méthylique, l'alcool éthylique, l'alcool butylique, l'isopropanol, un catalyseur acide, l'addition facultative d'une résine hydrosoluble, l'addition facultative de particules solides choisies parmi la silice, l'alumine et la magnésie seule ou en combinaison ;
- un chauffage du préhydrolysat à une température inférieure à 400°C pour obtenir un film sec, puis la polymérisation du préhydrolysat ;

  peut être appliqué sur les deux faces d'une tôle d'acier à grains orientés à l'épaisseur finale d'utilisation qui est inférieure à 0,50 mm, après le recuit de recristallisation secondaire. Il peut être appliqué après un planage à chaud suivant le recuit de recristallisation secondaire et d'épuration.

## Revendications

1. Procédé pour réaliser un revêtement sur une tôle en acier électrique dans lequel on dépose sur la tôle un préhydrolysat composé d'un précurseur, d'un solvant et d'un catalyseur, on chauffe le préhydrolysat à une température pour l'obtention d'un revêtement sec, **caractérisé en ce que** :

   - on dépose sur au moins une face de la tôle en acier électrique un préhydrolysat comprenant dans sa composition, un précurseur choisi parmi un monomère alkoxysilane de formule Si $(OR)_n R'_{(4-n)}$, n étant égal à 2 ou 3, R' désignant un groupement alkyl de type méthyl ou aryl de type phényl, un solvant composé d'eau et d'un alcool choisi parmi l'alcool méthylique, l'alcool éthylique, l'alcool butylique, l'isopropanol, et un catalyseur acide,

- on chauffe le préhydrolysat à une température inférieure à 400°C pour obtenir un film sec puis la polymérisation du préhydrolysat qui génère un revêtement du type vernis silicone,
- le catatyseur étant choisi parmi l'acide nitrique, l'acide sulfurique, l'acide phosphorique, l'acide chlorhydrique.

**2.** Procédé selon la revendication 1, **caractérisé en ce que** le préhydrolysat a un pH compris entre 2 et 3.

**3.** Procédé selon les revendications 1 et 2, **caractérisé en ce que** le préhydrolysat comprend en outre dans sa composition une résine organique hydrosoluble.

**4.** Procédé selon la revendication 3, **caractérisé en ce que** la résine hydrosoluble est choisie parmi une polyvinylpyrrolidone, un polymère acrylique, un polymère glycol, un polypropylène glycol, un acide polyacrylique (PAA), pris seuls ou en combinaison.

**5.** Procédé selon les revendications 3 et 4, **caractérisé en ce que** le film sec, après polymérisation du préhydrolysat, comprend une proportion de résine inférieure à 40 %.

**6.** Procédé selon les revendications 1 et 2, **caractérisé en ce que** le préhydrolysat comprend en outre des particules solides hydrophiles.

**7.** Procédé selon la revendication 6, **caractérisé en ce que** les particules solides hydrophiles sont choisies parmi la silice pyrogénée, l'alumine, la magnésie.

**8.** Procédé selon les revendications 6 et 7, **caractérisé en ce que** la silice pyrogénée à une granulométrie comprise entre 5 et 100 nm et une surface spécifique comprise entre 5 et 500 $m^2/g$.

**9.** Procédé selon les revendications 1 et 2, **caractérisé en ce que** le préhydrolysat comprend en outre, un pigment organique ou minéral.

**10.** Procédé selon les revendications 1 à 8, **caractérisé en ce qu'**après obtention du revêtement du type vernis silicone, on découpe la tôle en éléments qui par empilement forment un circuit magnétique.

**11.** Procédé selon les revendications 1 à 10, **caractérisé en ce que** la tôle revêtue du vernis silicone ou le circuit magnétique obtenu par découpe de la tôle revêtue du vernis en éléments et empilement desdits éléments est soumis à un traitement thermique de recuit à une température supérieure à 400°C.

**12.** Procédé selon les revendications 1 à 11, **caractérisé en ce que** le traitement de recuit est effectué sous air.

**13.** Procédé selon les revendications 1 à 12, **caractérisé en ce que** le traitement thermique de recuit comprend :

- une montée en température avec un gradient de température inférieur à 100°C/heure sous air,
- un palier de température compris entre 400°C et 600°C dont la durée est comprise entre 1 heure et 2 heures sous air,
- un refroidissement sous azote sec ou humide.

**14.** Procédé selon les revendications 1 à 12, **caractérisé en ce que** le traitement thermique de recuit comprend :

- une montée en température avec un gradient de température inférieur à 100°C/heure sous air,
- un premier palier de température compris entre 400°C et 600°C dont la durée est comprise entre 1 heure et 2 heures sous air,
- une remontée en température sous atmosphère d'azote sec ou humide,
- un second palier de température dit palier supérieur compris entre 700°C et 850°C d'une durée comprise entre 1 heure et 4 heures sous une atmosphère d'azote sec ou humide,
- un refroidissement sous azote sec ou humide.

**15.** Procédé selon les revendications 13 et 14, **caractérisé en ce que** le vernis de type silicone est transformé en

silice amorphe isolante ou en céramique.

## Claims

1. Process for producing a coating on an electrical steel sheet, in which a prehydrolysate, composed of a precursor, a solvent and a catalyst, is deposited on the sheet and the prehydrolysate is heated to a temperature for obtaining a dry coating, **characterized in that**:

   - a prehydrolysate is deposited on at least one side of the electrical steel sheet, the said prehydrolysate comprising, in its composition, a precursor chosen from an alkoxysilane monomer of formula $Si(OR)_nR'_{(4-n)}$, n being equal to 2 or 3, R' denoting an alkyl group of the methyl type or an aryl group of the phenyl type, a solvent, composed of water and an alcohol chosen from methyl alcohol, ethyl alcohol, butyl alcohol and isopropanol, and an acid catalyst;
   - the prehydrolysate is heated to a temperature below 400°C in order to obtain a dry film and then to cure the prehydrolysate which generates a coating of the silicone varnish type;
   - the catalyst being chosen from nitric acid, sulphuric acid, phosphoric acid and hydrochloric acid.

2. Process according to Claim 1, **characterized in that** the prehydrolysate has a pH of between 2 and 3.

3. Process according to Claims 1 and 2, **characterized in that** the prehydrolysate furthermore includes in its composition a water-soluble organic resin.

4. Process according to Claim 3, **characterized in that** the water-soluble resin is chosen from a polyvinylpyrrolidone, an acrylic polymer, a glycol polymer, a polypropylene glycol and a polyacrylic acid (PAA), taken by themselves or as a combination.

5. Process according to Claims 3 and 4, **characterized in that**, after the prehydrolysate has been cured, the dry film comprises a resin proportion of less than 40%.

6. Process according to Claims 1 and 2, **characterized in that** the prehydrolysate further includes hydrophilic solid particles.

7. Process according to Claim 6, **characterized in that** the hydrophilic solid particles are chosen from pyrogenic silica, alumina and magnesia.

8. Process according to Claims 6 and 7, **characterized in that** pyrogenic silica has a particle size of between 5 and 100 nm and a specific surface area of between 5 and 500 $m^2/g$.

9. Process according to Claims 1 and 2, **characterized in that** the prehydrolysate furthermore includes an organic or mineral pigment.

10. Process according to Claims 1 to 8, **characterized in that**, after the silicone varnish coating has been obtained, the sheet is cut into laminations which, by stacking them, form a magnetic circuit.

11. Process according to Claims 1 to 10, **characterized in that** the sheet coated with silicone varnish, or the magnetic circuit obtained by cutting the varnish-coated sheet into laminations and stacking the said laminations, undergoes an annealing heat treatment at a temperature above 400°C.

12. Process according to Claims 1 to 11, **characterized in that** the annealing treatment is carried out in air.

13. Process according to Claims 1 to 12, **characterized in that** the annealing heat treatment comprises:

    - a temperature rise, with a temperature gradient of less than 100°C/hour, in air;
    - a temperature hold at between 400°C and 600°C, the duration of which is between 1 hour and 2 hours, in air;
    - a cooling step in dry or wet nitrogen.

14. Process according to Claims 1 to 12, **characterized in that** the annealing heat treatment comprises:

- a temperature rise, with a temperature gradient of less than 100°C/hour, in air;
- a first temperature hold at between 400°C and 600°C, the duration of which is between 1 hour and 2 hours, in air;
- a temperature rise in an atmosphere of dry or wet nitrogen;
- a second temperature hold, called the upper hold, at between 700°C and 850°C with a duration of between 1 hour and 4 hours, in an atmosphere of dry or wet nitrogen;
- a cooling step in dry or wet nitrogen.

**15.** Process according to Claims 13 and 14, **characterized in that** the silicone varnish is converted into an insulating amorphous silica or into a ceramic.

**Patentansprüche**

**1.** Verfahren zur Herstellung eines Überzugs auf einem Elektrostahlblech, wobei auf dem Blech ein Vorhydrolysat abgelagert wird, gebildet aus einem Zwischenstoff, einem Lösemittel und einem Katalysator, und das Vorhydrolysat auf eine Temperatur erhitzt wird, bei der ein trockener Überzug erzielt wird, **dadurch gekennzeichnet, dass**:

- auf mindestens einer Seite des Elektrostahlblechs ein Vorhydrolysat abgelagert wird, umfassend in seiner Zusammensetzung einen Zwischenstoff, gewählt aus einem Alkoxysilan-Monomer mit der Formel $Si(OR)_nR'_{(4-n)}$, wobei n gleich 2 oder 3 ist und R' eine Alkylgruppe vom Typ Methyl oder eine Arylgruppe vom Typ Phenyl bezeichnet, ein Lösemittel, zusammengesetzt aus Wasser und einem Alkohol, gewählt aus Methylalkohol, Ethylalkohol, Butylalkohol, Isopropanol, und einen sauren Katalysator;

- das Vorhydrolysat auf eine Temperatur unter 400°C erhitzt wird, um einen trockenen Film und danach die Polymerisation des Vorhydrolysats zu erzielen, die einen Überzug vom Typ Silikonlack erzeugt;

- der Katalysator gewählt wird aus Salpetersäure, Schwefelsäure, Phosphorsäure, Salzsäure.

**2.** Verfahren nach Anspruch 1, **dadurch gekennzeichnet, dass** das Vorhydrolysat einen pH-Wert zwischen 2 und 3 hat.

**3.** Verfahren nach den Ansprüchen 1 und 2, **dadurch gekennzeichnet, dass** das Vorhydrolysat darüber hinaus in seiner Zusammensetzung ein wasserlösliches organisches Harz umfasst.

**4.** Verfahren nach Anspruch 3, **dadurch gekennzeichnet, dass** das wasserlösliche Harz gewählt wird aus einem Polyvinylpyrrolidon, einem Acrylpolymer, einem Glycolpolymer, einem Polypropylenglycol, einer Polyacrylsäure (PAA), allein oder in Kombination verwendet.

**5.** Verfahren nach den Ansprüchen 3 und 4, **dadurch gekennzeichnet, dass** der trockene Film nach der Polymerisation des Vorhydrolysats einen Harzanteil von unter 40% aufweist.

**6.** Verfahren nach den Ansprüchen 1 und 2, **dadurch gekennzeichnet, dass** das Vorhydrolysat darüber hinaus hydrophile feste Partikel umfasst.

**7.** Verfahren nach Anspruch 6, **dadurch gekennzeichnet, dass** die hydrophilen festen Partikel aus pyrogener Kieselsäure, Aluminium, Magnesium gewählt werden.

**8.** Verfahren nach den Ansprüchen 6 und 7, **dadurch gekennzeichnet, dass** die pyrogene Kieselsäure eine Korngröße zwischen 5 und 100 nm und eine spezifische Oberfläche zwischen 5 und 500 $m^2/g$ hat.

**9.** Verfahren nach den Ansprüchen 1 und 2, **dadurch gekennzeichnet, dass** das Vorhydrolysat darüber hinaus ein organisches oder mineralisches Pigment umfasst.

**10.** Verfahren nach den Ansprüchen 1 bis 8, **dadurch gekennzeichnet, dass** nach der Herstellung des Überzugs vom Typ Silikonlack das Blech in Elemente geschnitten wird, die durch Aufeinanderstapeln einen Magnetkreis bilden.

**11.** Verfahren nach den Ansprüchen 1 bis 10, **dadurch gekennzeichnet, dass** das mit dem Silikonlack beschichtete Blech oder der Magnetkreis, der durch Ausschneiden des mit dem Lack beschichteten Blechs in Elemente und Aufeinanderstapeln der genannten Elemente gebildet wurde, einer thermischen Glühbehandlung bei einer Temperatur über 400°C unterzogen wird.

**12.** Verfahren nach den Ansprüchen 1 bis 11, **dadurch gekennzeichnet, dass** die Glühbehandlung an der Luft durchgeführt wird.

**13.** Verfahren nach den Ansprüchen 1 bis 12, **dadurch gekennzeichnet, dass** die thermische Glühbehandlung umfasst:

- einen Temperaturanstieg an der Luft mit einem Temperaturgradienten von unter 100°C/Stunde;
- eine Temperaturstufe zwischen 400°C und 600°C an der Luft, deren Dauer zwischen 1 Stunde und 2 Stunden beträgt;
- eine Abkühlung unter trockenem oder feuchtem Stickstoff.

**14.** Verfahren nach den Ansprüchen 1 bis 12, **dadurch gekennzeichnet, dass** die thermische Glühbehandlung umfasst:

- einen Temperaturanstieg an der Luft mit einem Temperaturgradienten von unter 100°C/Stunde;
- eine erste Temperaturstufe zwischen 400°C und 600°C an der Luft, deren Dauer zwischen 1 Stunde und 2 Stunden beträgt;
- einen Temperaturanstieg in einer Atmosphäre aus trockenem oder feuchtem Stickstoff;
- eine zweite Temperaturstufe, genannt obere Stufe, zwischen 700°C und 850°C in einer Atmosphäre aus trokkenem oder feuchtem Stickstoff, deren Dauer zwischen 1 Stunde und 4 Stunden beträgt;
- eine Abkühlung in trockenem oder feuchtem Stickstoff.

**15.** Verfahren nach den Ansprüchen 13 und 14, **dadurch gekennzeichnet, dass** der Lack vom Typ Silikon in isolierende amorphe Kieselsäure oder in eine Keramik umgewandelt wird.

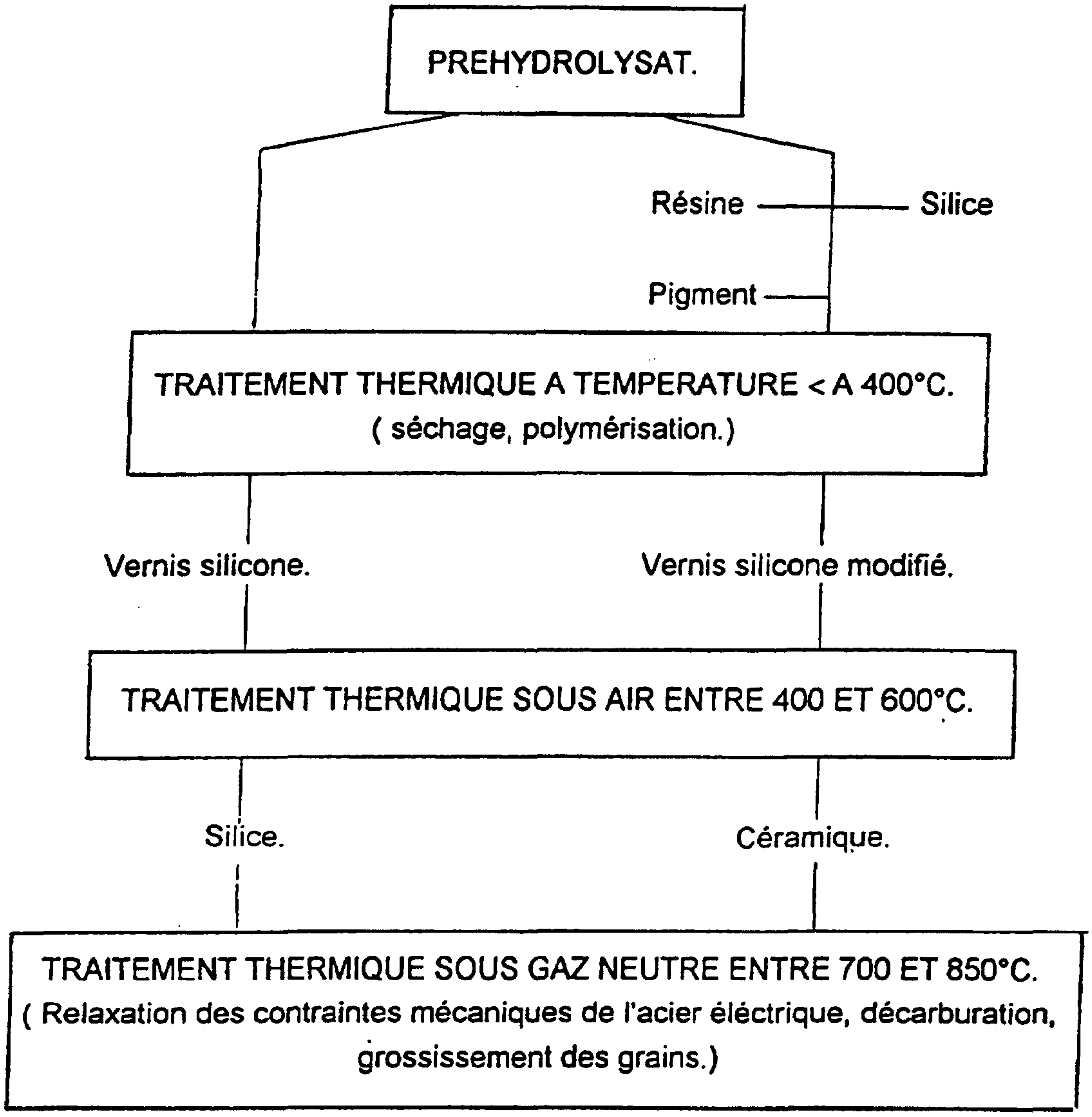
PREHYDROLYSAT.
Résine
Silice
Pigment
TRAITEMENT THERMIQUE A TEMPERATURE < A 400°C.
( séchage, polymérisation.)
Vernis silicone.
Vernis silicone modifié.
TRAITEMENT THERMIQUE SOUS AIR ENTRE 400 ET 600°C.
Silice.
Céramique.
TRAITEMENT THERMIQUE SOUS GAZ NEUTRE ENTRE 700 ET 850°C.
( Relaxation des contraintes mécaniques de l'acier éléctrique, décarburation, grossissement des grains.)

FIG.1

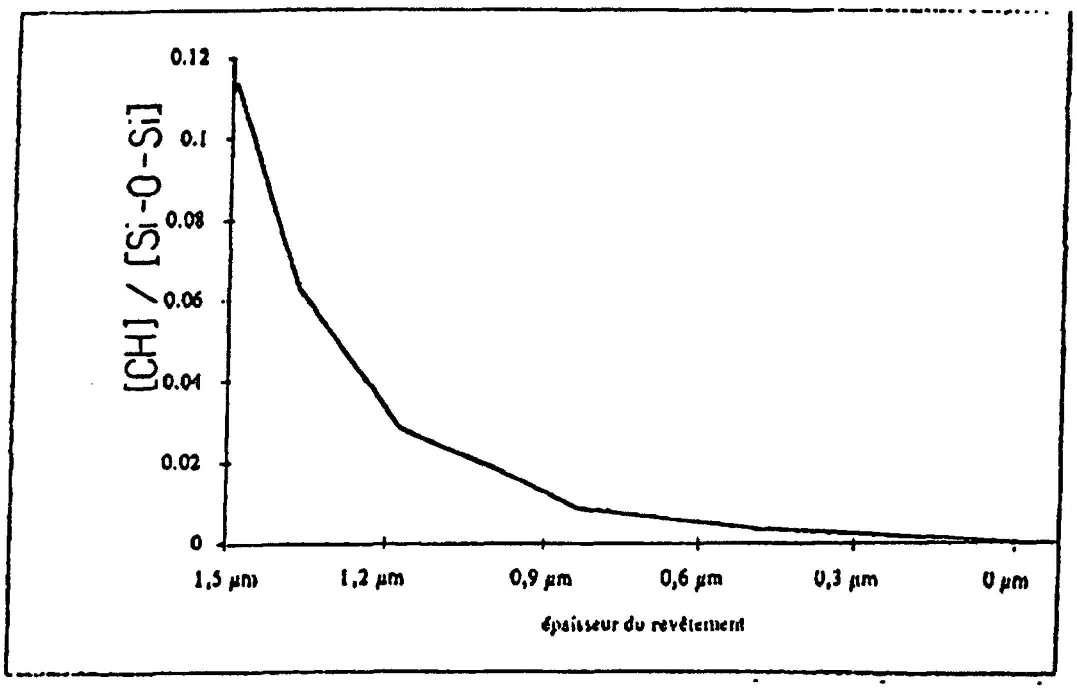
0.12
0.1
0.08
0.06
0.04
0.02
0
[CH] / [Si-O-Si]
1,5 µm
1,2 µm
0,9 µm
0,6 µm
0,3 µm
0 µm
épaisseur du revêtement

FIG.2

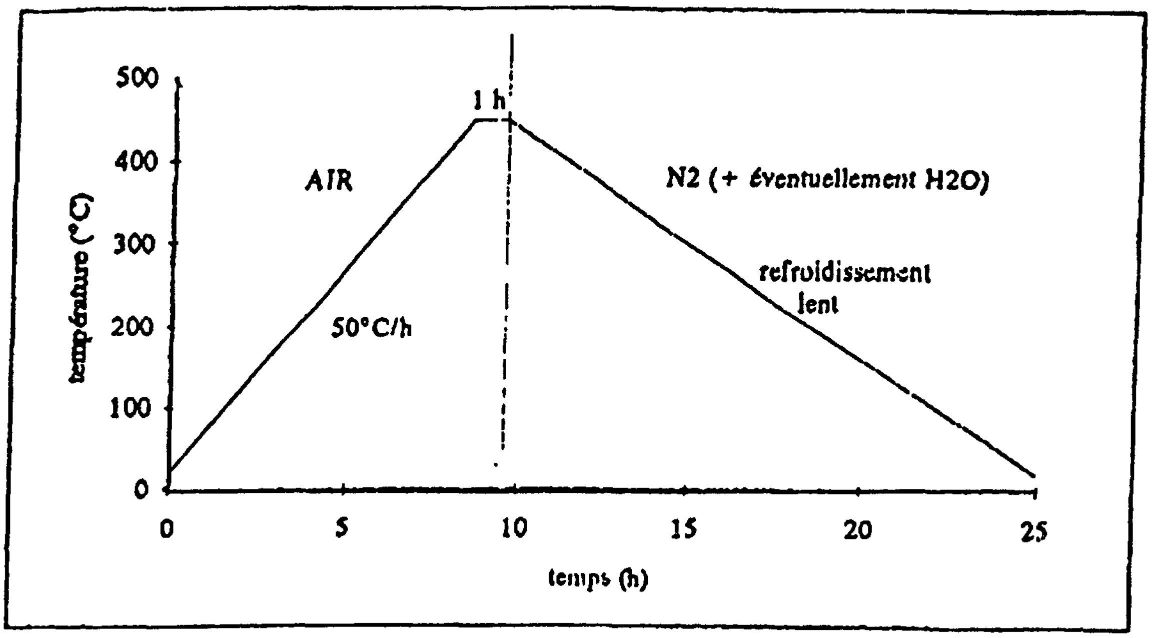
500
400
300
200
100
0
température (°C)
1 h
AIR
50°C/h
N2 (+ éventuellement H2O)
refroidissement
lent
0
5
10
15
20
25
temps (h)

FIG.3A

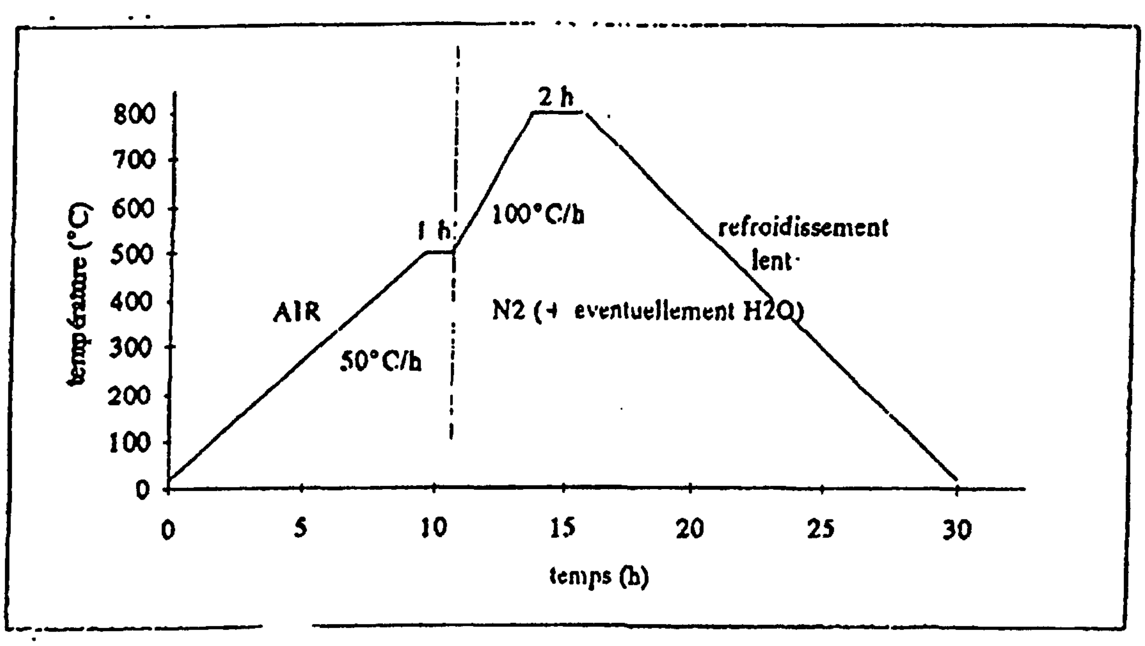
800
700
600
500
400
300
200
100
0
température (°C)
2 h
1 h
100°C/h
refroidissement
lent
AIR
50°C/h
N2 (+ eventuellement H2O)
0
5
10
15
20
25
30
temps (h)

FIG.3B